**Europäisches Patentamt**

**European Patent Office**

**Office européen des brevets**

(19)

(11) Veröffentlichungsnummer : **0 234 361 B2**

(12) **NEUE EUROPÄISCHE PATENTSCHRIFT**

(45) Veröffentlichungstag der neuen Patentschrift :
**13.07.94 Patentblatt 94/28**

(51) Int. Cl.⁵ : **C08G 18/08, C08G 18/42,**
**C08G 18/75, C09D 175/06**

(21) Anmeldenummer : **87101620.0**

(22) Anmeldetag : **06.02.87**

(54) **Dispersionen von vernetzten Polymermikroteilchen in wässrigen Medien, Verfahren zur Herstellung dieser Dispersionen und Beschichtungszusammensetzungen, die diese Dispersionen enthalten.**

Verbunden mit 87901051.0/0294376
(europäische
Anmeldenummer/Veröffentlichsnummer) durch
Entscheidung vom 30.05.89.
Die Akte enthält technische Angaben, die nach
dem Eingang der Anmeldung eingereicht
wurden und die nicht in dieser Patentschrift
enthalten sind.

(30) Priorität : **28.02.86 DE 3606512**

(43) Veröffentlichungstag der Anmeldung :
**02.09.87 Patentblatt 87/36**

(45) Bekanntmachung des Hinweises auf die
Patenterteilung :
**25.04.90 Patentblatt 90/17**

(45) Bekanntmachung des Hinweises auf die
Entscheidung über den Einspruch :
**13.07.94 Patentblatt 94/28**

(84) Benannte Vertragsstaaten :
**AT BE CH DE ES FR GB IT LI NL SE**

(56) Entgegenhaltungen :
**EP-A- 0 103 174**

(56) Entgegenhaltungen :
**EP-A- 0 157 291**
**EP-B- 0 148 970**
**BE-A- 0 878 962**
**DE-A- 2 538 484**
**DE-A- 3 325 163**
**US-A- 4 083 831**
**US-A- 4 171 391**
**US-A- 4 203 883**

(73) Patentinhaber : **BASF Lacke + Farben AG**
**Glasuritstrasse 1**
**D-48165 Münster-Hiltrup (DE)**

(72) Erfinder : **Hille, Hans-Dieter**
**In der Schlade 24**
**D-5060 Bergisch-Gladbach (DE)**
Erfinder : **Müller, Horst**
**Pilzweg 10**
**D-5000 Köln 80 (DE)**
Erfinder : **Dobbelstein, Arnold**
**Emil-Nolde-Weg 95**
**D-4400 Münster (DE)**

(74) Vertreter : **Münch, Volker, Dr. et al**
**BASF Lacke + Farben AG**
**Patente/Lizenzen/Dokumentation**
**Postfach 61 23**
**D-48136 Münster (DE)**

**Beschreibung**

Die Erfindung betrifft Dispersionen von vernetzten Polymermikroteilchen in wäßrigen Medien.

Es ist ein erklärtes Ziel der lackhersteller, den Anteil an organischen Lösungsmitteln in Beschichtungszusammensetzungen so weit wie möglich herabzusetzen.

Ein Weg zur Erreichung dieses Zieles besteht in der Entwicklung von wasserverdünnbaren Beschichtungszusammensetzungen.

Insbesondere auf dem Gebiet der Automobillackierung, aber auch in anderen Bereichen, besteht ein großes Interesse an wäßrigen Lacksystemen.

In der Automobillackierung haben sich Mehrschichtlackierungen des "Basecoat-Clearcoat"-Typs vor allem für Metalleffektlackierungen weitgehend durchgesetzt.

"Basecoat-Clearcoat"-Lackierungen werden hergestellt, indem nach Vorlackierung mittels eines pigmentierten Basislackes und kurzer Ablüftzeit ohne Einbrennschritt (Naß-in-naß-Verfharen) ein Klarlack überlackiert wird und anschließend Basislack und Klarlack zusammen eingebrannt werden.

Es hat nicht an Versuchen gefehlt, zumindest die Basisschichten dieser Zweischichtsysteme aus wäßrigen Überzugszusammensetzungen herzustellen.

Die Überzugsmittel zur Herstellung dieser Basisschichten müssen nach dem heute üblichen rationellen "Naß-in-naß"-Verfahren verarbeitbar sein, d.h. sie müssen nach einer möglichst kurzen Vortrocknungszeit ohne Einbrennschritt mit einer (transparenten) Deckschicht überlackiert werden können, ohne störende Anlöseerscheinungen und "strike in"-Phänomene zu zeigen.

Bei der Entwicklung von Überzugsmitteln für Basisschichten von Metalleffektlacken müssen außerdem noch weitere Probleme gelöst werden. Der Metalleffekt hängt entscheidend von der Orientierung der Metallpigmentteilchen im Lackfilm ab. Ein im "Naß-in-naß"-Verfahren verarbeitbarerMetalleffekt-Basislack muß demnach Lackfilme liefern, inn denen die Metallpigmente nach der Applikation in einer günstigen räumlichen Orientierung vorliegen und in denen diese Orientierung schnell so fixiert wird, daß sie im Laufe des weiteren Lackierprozesses nicht gestört werden kann.

Die Ersetzung der in den Konventionellen Lacksystemen eingesetzten organischen Lösungsmittel zieht eine Reihe von Problemen nach sich.

So ist zum Beispiel die Rheologie (Viskositätsverlauf während der Applikation, Pseudoplastizität, Thixotropie, Verlauf und Ablaufeigenschaften) konventioneller Lacksysteme mit relativ einfachen Mitteln über das Abdunstverhalten der verwendeten organischen Lösungmittel bzw. Lösungsmittelgemische gezielt zu steuern. Diese Möglichkeiten können bei wäßrigen Systemen nur in sehr eingeschränktem Umfang bzw. gar nicht genutzt werden.

Nun ist aber gerade bei der Herstellung qualitative hochwertiger Mehrschichtlackierungen, insbesondere Metalleffektlackierungen, eine Steuerung der rheologischen Eingenschaften der eingesetzten Beschichtungszusammensetzungen von äußerst großer Wichtigkeit.

So wirkt sich z.B. ein schneller Viskositätsanstieg nach der Applikation sehr günstig auf die Orientierung und Fixierung der Metallpigmentteilchen in Metalleffekt-Basislacken aus.

Aber auch bei anderen Beschichtungsverfahren - insbesondere bei durch Spritzapplication aufgetragenen Überzügen - hängt die Qualität der erhaltenen Beschichtungen in starkem Maße von den rheologischen Eigenschaften der verwendeten Beschichtungsammensetzungen ab.

Es ist bekannt, daß die rheologischen Eigenschaften von wäßrigen Beschichtungszusammensetzungen durch Zugabe von vernetzten Polymermikroteilchen beeinflußt werden können.

Weiter ist bekannt, daß bei der Herstellung von Mehrschichtüberzügen des Basecoat-Clearcoat-Typs die obenerwähnten störenden Anlöseerscheinungen und strike-in-Phänomene zurückgedrängt werden, wenn Basisbeschichtungszusammensetzungen eingesetzt werden, die Vernetzte Polymermikroteilchen enthalten.

So wird in der EP-A-38 127 ein Verfahren zur Herstellung mehrschichtiger Üverzüge des Basecoat-Clearcoat-Typs offenbart, bei dem wäßrige Basisbeschichtungszusammensetzungen verwendet werden, die stabil dispergierte, vernetzte Polymermikroteilchen enthalten und einen pseudoplastischen oder thixotropen Charakter aufweisen.

Bei der Inkorporation von vernetzten Polymermikroteilchen in Beschichtungszusammensetzungen kann es zu Störungen kommen, die auf Unverträglichkeiten zwischen den Mikroteilchen und anderen Lackbestandteilen, insbesondere zwischen Miktroteilchen und den übrigen Bindemittelkomponenten zurückzuführen sind.

Wenn z.B. der Brechungsindex der vernetzten Polymermikroteilchen nicht sorgfältig auf den Brechungsindex der übrigen Bindemittelbestandteile abgestimmt wird, dann komt es infolge von Lichtstreueffekten zur Bildung von trüben Lackfilmen.

Untersuchungen haben gezeigt, daß wäßrige Beschichtungszusammensetzungen, die Polyurethane und

2

gegebenenfalls auch noch Polyester als Hauptbindemittelbestandteile enthalten, sehr vorteilhafte Eigenschaften aufweisen und insbesondere für einen Einsatz als Basisbeschichtungszusammensetzungen in Zweischichmetalleffektlackierungen des Basecoat-Clearcoat-Typs gut geeignet sind (vgl. z.B. US-A-4,558,090).

Wenn in solche Beschichtungszusammensetzungen die in der EP-A-38127 als besonders geeignet herausgehobenen Mikroteilchen aus vernetzten Acrylpolymeren eingearbeitet werden, dann werden oft auf Unverträglichkeiten zwischen den Mikroteilchen und den übrigen Bindemittelkomponenten zurückzuführende Störungen, insbesondere Trübungserscheinungen in den erhaltenen Lackierungen beobachtet.

In der EP-A-38127 wird darauf hingewiesen, daß die vernetzten Polymermikroteilchen auch aus vernetzten Polykondesaten, wie z.B. vernetzten Polyestermikrogelteilchen bestehen können. Es wird aber auch bermerkt, daß es Schwierigkeiten bereiten kann, wirklich vernetzte Polykondesate, wie z.B. Polyester, herzustellen.

In der in der EP-A-38127 zitierten GB-A-1403794 wird ein Verfahren zur Herstellung von Dispersionen von Polymermiktroteilchen in organischen Lösungsmitteln beschrieben, das sowohl auf Polymere, die über Polyadditions-, als auch auf Polymere, die über Polykondensationsreaktionen gewonnen werden, anwendbar sein soll.

Dieses Verfahren kann aber nur in den Fällen angewandt werden, in denen eines der Monomere bei der Polymerisationstemperatur fest und in dem organischen Reaktionsmedium schwer löslich ist und die eventuell noch vorhandenen übrigen Monomere in dem organischen Reaktionsmedium merklich löslich sind.

Im ersten Schritt des in der GB-A-1403794 offenbarten Verfahrens wird das feste, schwer lösliche Monomer mit Hilfe von Mahlprozessen in dem organischen Reaktionsmedium, das ein geeignetes Stabilisierungsmittel enthält, dispergiert. Dann wird die Dispersion, die gegebenenfalls noch weitere Monomere enthält, auf die Polymerisations-temperatur erhitzt. Die Polymerisation muß in Gegenwart eines das entstehende Polymer stabilisierenden Stabilisators durchgeführt werden.

Das in der GB-A-1403794 beschriebene Verfahren ist aus einer Reihe von Gründen für eine Synthese von vernetzten Polymermikrogelteilchen, die mit Aussicht auf Erfolg in wäßrigen Systemen anstelle von vernetzten Acrylpolymermikroteilchen eingesetzt werden können, nicht geeignet:

1) Das Verfahren ist äußerst aufwendig und liefert zunächst nur Dispersionen in organischen Medien, die nachträglich in wäßrige Dispersionen überführt werden müssen.

2) Die Monomerenauswahl ist durch die Bedingungen hinsichtlich des Schmelzpunktes und der Löslichkeit sehr stark eingeschränkt, und eine gezielte Synthese einer großen Palette von "maßgeschneiderten" Polymermikrogelteilchen ist nicht möglich.

3) Nach dem in der GB-A-1403794 beschriebenen Verfahren können keine wäßrigen Dispersionen von vernetzten Polymermikrogelteilchen mit einem Durchmesser, der unter einem Mikrometer liegt, hergestellt werden. (Wäßrige Dispersionen, die Teilchen mit einem Durchmesser von über 1 μm enthalten, zeigen Sedimentationserscheinungen und sind als Rheologiehilfsmittel im allgemeinen unbrauchbar und können zu Störungen im fertigen Lackfilm führen).

Die der vorliegenden Erfindung zugrundeliegende Aufgabenstellung bestand demnach darin, Dispersionen von vernetzten Polymermikroteilchen in wäßrigen Medien herzustellen, mit deren Hilfe die rheologischen Eigenschaften von wäßrigen Beschichtungszusammensetzungen beeinflußbar sind, die als Bestandteile in Basisbeschichtungszusammensetzungen des Basecoat-Clearcoat-Typs die oben erläuterten positiven Wirkungen zeigen und die mit möglichst wenig Aufwand insbesondere auf wäßrige Beschichtungszusammensetzungen, die Polyurethane und gegebenenfalls auch noch Polyester als Hauptbindemittelbestandteile enthalten, optimal abgestimmt werden können.

Diese Aufgabe wird überraschenderweise durch Dispersionen von vernetzten Polymermikroteilchen in wäßrigen Medien gelöst, die dadurch gekennzeichnet sind, daß die Dispersionen hergestellt worden sind, indem

(1) ein Gemisch aus den Komponenten (A) und (B) in einem wäßrigen Medium dispergiert worden ist, wobei

- die Komponente (A) aus einem oder mehreren mindestens 2 Hydroxylgruppen enthaltenden Polyesterpolyol(en) und

- die Komponente (B) aus einer oder mehreren Polyisocyanat-verbindung(en)

besteht und wobei die als Komponente (A) eingesetzten Polyesterpolyole eine zur Bildung einer stabilen Dispersion ausreichende Anzahl ionischer Gruppen, bevorzugt Carboxylatgruppen, enthalten und wenigstens ein Teil der komponente (A) und/oder (B) mehr als 2 Hydroxyl- bzw. Isocyanatgruppen pro Molekül enthält, und

(2) die so erhaltene Dispersion anschließend so hoch erhitzt worden, ist, daß die Komponenten (A) und (B) zu vernetzten Polymermikroteilchen umgesetzt worden sind.

Mit Hilfe der erfindungsgemäßen Dispersionen können die rheologischen Eigenschaften wäßriger Beschichtungszusammensetzungen gezielt beeinflußt werden.

Für eine befriedigende Lösung der der vorliegenden Erfindung zugrundeliegenden Aufgabenstellung ist es erforderlich, daß der Durchmesser der in den erfindungsgemäßen Dispersionen enthaltenen vernetzten Polymermikroteilchen unter einem Mikrometer, bevorzugt zwischen 0,05 bis 0,2 µm liegt.

Ein großer Vorteil der erfindungsgemäßen Dispersionen ist darin zu sehen, daß die Teilchengroße der vernetzten Polymermikroteilchen mit einfachen Mitteln (z.B. über die Menge der in der Ausgangskomponente (A) enthaltenen ionischen Gruppen) gesteuert werden kann und daß mühelos vernetzte Teilchen mit einem Durchmesser unter 1 µm, bevorzugt 0,05 bis 0,2 µm, erhalten werden können.

Daneben kann aber auch das Quellverhalten der vernetzten Teilchen auf einfache Weise innerhalb eines großen Rahmens gezielt beeinflußt werden.

Während bei den Polymermikroteilchen auf Basis von Vinylmonomeren im wesentlichen immer nur eine Modifizierung der Polymerseitenketten möglich ist, kann bei den erfindungsgemäßen Mikrogeldispersion die Netzwerkstruktur der Teilchen durch gezielten Einbau bestimmter Kettensegmente beeinflußt werden.

Es ist bekannt, daß das Fließverhalten von wäßrigen Dispersionen u.a stark von der Größe und dem Quellverhalten der in den Dispersionen enthaltenen Teilchen abhängig ist.

Eine innerhalb eines breiten Rahmens mit einfachen Mitteln durchführbare, gezielte Beeinflussung dieser beiden Parameter ist bei den zum Stand der Technik gehörenden wäßrigen Dispersionen, insbesondere Dispersionen auf Basis von Acrylpolymeren, nich möglich.

Da die in den erfindungsgemäßen Dispersionen enthaltenen Polymermikroteilchen in ihrer chemischen Zusammensetzung innerhalb eines überaus großen Rahmens auf einfache Weise variierbar sind, können die erfindungsgemäßen Dispersionen mit einfachen Mitteln optimal auf die in den Beschichtungszusammensetzungen sonst noch enthaltenen Bindemittelkomponenten abgestimmt werden.

So lassen sich die erfindungsgemäßen Dispersionen zu wäßrigen Beschichtungszusammensetzungen verarbeiten, aus denen vor allem in den Fällen, in denen Polyurethane un gegebenenfalls auch noch Polyester als Hauptbindemittelbestandteile enthalten sind, Beschichtungen herstellbar sind, die ausgezeichnete optische Eigenschaften und keinerlei Trübungen aufweisen.

Beim Einsatz der erfindungsgemäßen Dispersionen in Basisbeschichtungszusammensetzungen zer Herstellung von im Naß-in-naß-Verfahren applizierten Mehrschichtüberzügen des Basecoat-Clearcoat-Typs - insbesondere von Metalleffektlackierungen - werden ausgezeichnete Mehrschichtlackierungen erhalten, die keinerlei strike-in- und im Fall von Metallclackierungen auch keine Wolkenbildungsphänomene und einen ausgezeichneten Metalleffekt zeigen.

Die besten Ergebnisse werden auch hier mit Beschichtungszusammensetzungen erzielt, die Polyurethane und gegebenenfalls auch noch Polyester als Hauptbindemittelkomponenten enthalten.

Es können aber auch mit anderen Bindemittelsystemen Ergebnisse erzielt werden, die oft besser sind als die, die mit Mikroteilchen auf Basis von Acrylpolymeren als einzige Miktroteilchenkomponente erzielbar sind.

In machen Fällen hat es sich als vorteilhaft erwiesen, den erfindungsgemäßen Beschichtungszusammensetzungen Mikroteilchen aus Acrylpolymeren zuzumischen.

Gegenstand der vorliegenden Erfindung ist auch ein Verfahren zur Herstellung oder oben diskutierten Dispersionen, das dadurch gekennzeichnet ist, daß die Dispersionen hergestellt werden, indem

(1) ein Gemisch aus den Komponenten (A) und (B) in einem wäßrigen Medium dispergiert wird, wobei
- die Komponente (A) aus einem oder mehreren mindestens 2 Hydroxylgruppen enthaltenden Polyesterpolyolen und
- die Komponente (B) aus einer oder mehreren Polyisocyanatverbindung(en) besteht und wobei die Komponente (A) über eine zur Bildung einer stabilen Dispersion ausreichende Anzahl ionischer Gruppen, bevorzugt Carboxylatgruppen, verfügt und wenigstens ein Teil der Komponente (A) und-/oder (B) mehr als 2 Hydroxylgruppen bzw. Isocyanatgruppen pro Molekül enthält und

(2) die so erhaltene Dispersion anschließend so hoch erhizt wird, daß die Komponenten (A) und (B) zu vernetzten Polymermikroteilchen umgesetzt werden.

In "Aqueous Dispersions of Crosslinked Polyurethanes" (Tirpak & Markusch, Proc. 12th Waterborne and Higher Solids Coatings Symp., New Orleans 1985, 159-73) (1) wird eine Übersicht über die gebräuchlichen Techniken zur Herstellung von wäßrigen, unter anderem auch für Beschichtungszwecke einsetzbaren Polyurethandispersionen gegeben.

Weiter wird in (1) unter Bezugnahme auf die US-A-3,870,684 von Versuchen zur Herstellung von Dispersionen vernetzter, harnstoffgruppenhaltiger Polymermikroteilchen in einem wäßrigen Medium berichtet, bei denen in wäßriger Phase dispergierte, endständige Isocycanatgruppen aufweisende Polyurethanionomere mit Polyaminen vernetzt werden. Dieses Verfahren ist auf die Verwendung von Polyaminen als Vernetzungsmittel beschränkt und ermöglicht nur die Herstellung von instabilen, sedimentierenden, redispergierbaren wäßrigen Dispersionen, die aus Teilchen mit einem Durchmesser von 1 bis 1000 µm bestehen.

Die US-A-3,870,684 enthält keinerlei Hinweise darauf, daß die dort offenbarten Dispersionen als Hilfsmittel im oben diskutierten Sinn in wäßrigen Beschichtungszusammensetzungen einsetzbar sind.

Nach dem erfindungsgemäßen Verfahren werden dagegen stabile wäßrige Dispersionen erhalten, die vernetzte Polymermikroteilchen enthalten, deren Durchmesser unter 1 μm, bevorzugt zwischen 0,05 bis 0,2 μm liegt.

Es ist selbstverständlich auch möglich, nach dem erfindungsgemäßen Verfahren Polymermikroteilchen herzustellen, deren Durchmesser über 1 μm liegt.

Nach (1) soll das in der US-PS-3,870,684 beschriebene Verfahren zu stabilen wäßrigen Dispersionen mit ausgezeichneten Filmbildungseigenschaften führen, wenn die endständige Isocyanatgruppen aufweisenden Polyurethanionomere durch Einführung von Polyoxyethylenblöcken modifiziert worden sing (vgl. US-A-4,408,008).

Aber auch dieses Verfahren erlaubt nur in Ausnahmefällen eine reproduzierbare, kontrollierte Synthese von vernetzten Polymermikroteilchen, deren Durchmesser unter 1 μm liegt, und der Fachmann ist auch hier bei der Auswahl des Polyurethanionomers, das ja zwingend Polyoxyethyleneinheiten enthalten muß, eingeschränkt, wodurch die Möglichkeiten einer gezielten Anpassung der Polymermikroteilchen an das übrige Bindemittelsystem extrem eingeschränkt werden.

Die US-PS-4,293,679 beschreibt ein Verfahren zur Herstellung wäßriger Dispersionen vernetzter, harnstoffgruppenhaltiger Polymermikroteilchen, bei dem ein hydrophiles, freie loscycanatgruppen aufweisendes Präpolymer, das aus einem mindestens zu 40 Gew.% aus Ethylenoxideinheiten bestehenden Polyol und einer Polyisocyanatverbindung hergestellt worden ist, in einem wasserlöslichen organischen Lösungsmittel gelöst und anschließend unter Rühren mit Wasser in großem Überschuß umgesetzt wird.

Bei diseem Verfahren hängt die Große der entstehenden Teilchen ganz wesentlich von der Viskosität der Präpolymerlösung, der Rührgeschwindigkeit und dem Zusatz von oberflächenaktiven Substanzen ab.

Zur Herstellung von Teilchen mit einem Durchmesser 1 μm müssen relative niedrig viskose Präpolymerlösungen mit hochleistungsfähigen Schnellrührern und unter Zusatz von oberflächenaktiven Substanzen verarbeitet werden.

Diese Verfahrensbedingungen bringen große Nachteile mit sich.

Es treten Probleme mit der Reproduzierbarkeit auf; die Verwendung von Schnellrührern ist mit großem technischen Aufwand verbunden, und der Zusatz von overflächenaktiven Verbindungen beeinträchtigt die erzielbare Qualität der Beschichtungen.

Ein weiterer gravierender Nachteil des in der US-PS-4,293,679 offenbarten Verfahrens ist der, daß die einsetzbaren Präpolymere auf Substanzen bechränkt sind, die zu mindestens 40 Gew.% aus Ethylenoxideinheiten bestehen und einen stark hydrophilen Charakter haben.

Damit ist es dem Fachmann nicht mehr moßglich, maßgeschneiderte Mikrogele darzustellen, weil er in der Wahl der Ausgangsverbindungen in einem hohen Maß festgelegt ist.

Außerdem führt der hohe Anteil an hydrophilen Molekülgruppierungen zu feuchtigkeitsempfindlichen Filmen.

Schließlich ist noch darauf hinzuweisen, daß auch in den beiden US-Patentschriften US-A-4,408,008 und US-A-4,293,679 keinerlei Hinweise darauf zu finden sind, daß die dort offenbarten Dispersionen als Hilfsmittel im oben diskutierten Sinn in wäßrigen Beschichtungszusammensetzungen einsetzbar sind.

Im folgenden sollen die erfindungsgemäßen Dispersionen und das Verfahren zu ihrer Herstellung näher erläutert werden:

Der erste Schritt zur Herstellung der erfindungsgemäßen Dispersionen besteht in der Bereitstellung einer Mischung aus den Komponenten (A) und (B), wobei darauf zu achten ist, daß die Komponente (A) über eine zur Bildung einer stabilen Dispersion ausreichende Anzahl ionischer Gruppen, bevorzugt Carboxylatgruppen, verfügt und daß wenigstens ein Teil der Komponente (A) und/oder (B) mehr als 2 hydroxyl- bzw. Isocyanatgruppen pro Moleküle enthält.

Unter dem Begriff "stabile Dispersion" sind Dispersionen gemeint, in denen die dispergierten Teilchen erst nach der Applikation und der Abgabe des Dispergiermediums koagulieren.

In manchen Fällen kann es nützlich sein, außer ionischen Gruppen weitere stabilisierende Gruppen, wie z.B. Polyooxyalkylengruppen, in die Komponente (A) zu inkorporieren.

Es kann sowhol anionisch als auch kationisch stabilisiert werden, wobei die anionische Stabilisierung, bevorzugt über Carboxylatgruppen, bevorzugt ist.

Die Ermittlung der für die Bildung einer stabilen Dispersion optimalen Konzentration an ionischen Gruppen in der Komponente (A) ist vom Durchschnittsfachmann mit Hilfe einfacher Routineuntersuchungen durchführbar. Die zur Bildung einer stabilen Dispersion in der Regel notwendige Konzentration an ionischen Gruppen liegt zwischen 0,01 bis 2 Milliäquivalenten pro Gramm Komponente (A).

Die gegebenenfalls notwendige Neutralisierung von zur Salzbildung befähigten Gruppen mit Hilfe von Basen bzw. Säuren erfolgt vorzugsweise kurz vor der Dispergierung bzw. während der Dispergierung des aus den Komponenten (A) und (B) bestehenden Gemisches in dem wäßrigen Dispergiermedium.

Als zur Salzbildung befähigte Gruppen kommen vor allem Carboxyl- und Sulfonsäuregruppen in Betracht. Diese Gruppen werden bevorzugt mit einem tertiären Amin neutralisiert.

Geeignete tertiäre Amine zur Neutralisation der zur Anionenbildung befähigten Gruppen sind beispielsweise Trimethylamin, Triathylamin, Dimethylanilin, Diäthylanilin, Triphenylamin, N,N Dimethyläthanolamin und Morpholin.

Der Gehalt an ionischen Gruppen bzw. der Neutralisationsgrad der zur Salzbildung geeigneten Gruppierungen ist ein wichtiger Parameter, über den die Größe der entstehenden vernetzten Polymermikroteilchen gesteuert werden kann.

Bei der Bereitstellung des aus den Komponenten (A) und (B) zusammengesetzten Gemisches ist darauf zu achten, daß es vor der Dispergierung der Mischung in dem wäßrigen Dispergiermedium zu keinerlei Vorvernetzungsreaktionen zwischen den Komponenten (A) und (B) kommt.

Die Komponente (A) besteht aus einem oder mehreren mindestens 2 Hhdroxylgruppen enthaltenden Polyesterpolyolen.

Beispiele geeigneter Polyesterpolyole sind insbesondere die in der Polyurethanchemie an sich bekannten Umsetzungsprodukte von mehrwertigen Polyolen mit Polycarbonsäuren bzw. Polycarbonsäureanhydriden.

Zur Herstellung der Polyesterpolyole, geeignete Polyole sind z.B. Ethylenglykol, Propandiol-1,2 und -1,3, Butandiol-1,3 und -1,4, die isomeren Pentandiole, Hexandiole oder Oktandiole, wie. z.B. 2-Ethylhexandiol-1,3, Trimethylolpropan, Glycerin, Bishydroxymethylcyclohexan, Erythrit, Mesoerythrit, Arabit, Adonit, Xylit, Mannit, Sorbit, Dulcit, Hexantriol und (Poly-)Pentaerythritol.

Die zur Herstellung der Polyesterpolyole geeigneten Polycarbonsäuren bestehen in erster Linie aus niedermolekularen Polycarbonsäuren oder ihren Anhydriden mit 2-18 Kohlenstoffatomen im Molekül.

Di- und Tricarbonsäuren werden bevorzugt eingesetzt.

Geeignete Säuren sind beispielsweise Oxalsäure, Bernsteinsäure, Fumarsäure, Phthalsäure, Isophthalsäure, Terephthalsäure, Tetrahydrophthalsäure, Hexahydrophthalsäure, Adipinsäure, Acelainsäure, Sebacinsäure, Maleinsäure, Glutarsäure, Hexachlorheptandicarbonsäure, Tetrachlorphthalsäure und Trimellithsäure. Anstelle dieser Säuren können auch ihre Anydride, soweit diese existieren, eingesetzt werden.

Es können auch Polyesterpolyole als Komponente (A) eingesetzt werden, die durch Polymerisation von Laktonen hergestellt worden sind.

Besonders gute Resultate sind mit Polyesterpolyolen erzielt worden, deren Moleküle im Durchschnitt je eine Carboxylatgruppe und mindestens zwei, bevorzugt mehr als zwei Hydroxylgruppen tragen.

Die (A) Komponente wird so ausgewählt, daß sie für sich alleine in dem wäßrigen Medium stabil dispergiert werden kann. Die Zusammenhänge zwischen dem Aufbau von Polyesterpolyolen (Säurezahl, Molekulargewicht...) und deren Dispergierverhalten sind dem Durchschnittsfachmann gut bekannt und er kann mit Hilfe einiger weniger orientierender Vorversuche die zur Lösung der jeweiligen Problemstellung opitmale Polyesterpolyolkomponente auswählen.

Es ist auch möglich, den als (A) Komponente eingesetzten Polyesterpolyolen noch weitere Verbindungen zuzusetzen, die gegenüber Isocycanatgruppen reaktive Gruppen enthalten. Dabei ist sorgfältig darauf zu achten, daß die aus den Komponenten gebildete Mischung in dem wäßrigen Medium stabil dispergierbar bleibt und daß die aus dieser Dispersion gebildeten vernetzten Polymermikroteilchen die gewünschte Größe aufweisen.

Als Beispiele für Verbindungen, die zu den die Komponente (A) bildenden Polyesterpolyolen zugesetzt werden können, seien die in der Polyurethanchemie an sich bekannten Polyetherpolyole genannt.

Als Komponente (B) kommen im Prinzip alle Isocyanatgruppen enthaltenden organischen Verbindungen in Frage. Als Beispiele seien genannt: Trimethylendiisocyanat, Tetramethylendiisocyanat, Pentamethylendiisocyanat, Hexamethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat,2,4-Toluylendiisocyanat, 2,6-Toluylendiisocyanat, 4,4'-Biphenylendiisocyanat, 1,5-Naphthylendiisocyanat, 1,4-Naphthylendiisocyanat 1-Isocyanatomethyl-5-isocyanato-1,3,3-trimethylcyclohexan, Bis-(4-isocyanatocyclohexyl)-methan, Bis-(4-isocyanatophenyl)-methan, 4,4'-Diisocyanatodiphenylether und 3,4-Bis-(8-isocyanatooctyl)-4-octyl-5-hexyl-cyclohexen.

Es ist auch möglich, isocyanatgruppenhaltige Präpolymere als Polyisocyanatkomponenten einzusetzen.

Beispiele für geeignete Präpolymere sind Reaktionsprodukte aus Polyisocyanaten, Polyether- und/oder Polyesterpolyoolen sowie gegebenenfalls üblichen Kettenverlängerern.

Bei der vorliegenden Erfindung werden die Polyisocyanatkomponenten bevorzugt eingesetzt, deren Isocyanatgruppen an (cyclo)aliphatische Reste gebunden sind.

Polyisocycanatverbindungen, die an aromatische Gruppen gebundene Isocyanatgruppen enthalten, sind

EP 0 234 361 B2

aufgrund ihrer hohen Reaktivität gegenüber Wasser nur in Ausnahmefällen (z.B. als Teilkomponente der Komponente (B)) einsetzbar.

Durch das Molverhältnis der Komponenten (A) und (B) und die Anzahl der in den Komponenten (A) und (B) enthaltenen gegenüber Isocyanatgruppen reaktiven Gruppen bzw. Isocyanatgruppen sowie die zur Herstellung der vernetzten Polymermikroteilchen gewählten Reaktionsbedingungen kann die Vernetzungsdichte der entstehenden Polymermikroteilchen beeinflußt werden.

Die Vernetzungsdichte wiederum korreliert in starkem Maße mit den rheologischen Eigenschaften der entstehenden Dispersionen.

So kann z.B. eine Abnahme des Vernetzungsgrades zu einem stärkeren Quellvermögen der Polymermikroteilchen und daraus resultierend zu einer Steigerung des pseudoplastischen Fließverhaltens der gebildeten Dispersionen führen.

Das Quellverhalten der Polymermikroteilchen kann auch über die chemische Natur der Komponenten (A) bzw. (B) gesteuert werden (Einbau von mehr oder weniger hydrophilen Molekülsegmenten; Einbau von mehr oder weniger starren Molekülteilen).

Besonders bevorzugte Gemische aus den Komponenten (A) und (B) bestehen aus Polyesterpolyolen, deren Moleküle im Durchschnitt je eine Carboxylgruppe und mindestens drei Hydroxylgruppen tragen und Triisocyanatverbindungen, deren Isocyanatgruppen an (cyclo)aliphatische Reste gebunden sind.

Das aus den Komponenten (A) und (B) bestehende Gemisch kann in Substanz in dem wäßrigen Dispergiermedium dispergiert werden.

Es ist jedoch vorteilhafter, die Komponenten (A) und (B) in einem mit Wasser mischbaren, gegenüber Isocycanatgruppen inerten, vorzugsweise unter 100°C siedenden organischem Lösungsmittel oder Lösungsmittelgemisch zu lösen bzw. zu dispergieren und dann diese Lösung oder Dispersion in dem wäßrigen Dispergiermedium zu dispergieren.

Als Lösungs- bzw. Dispergiermittel für das aus den Komponenten (A) und (B) bestehende Gemisch sind prizipiell alle mit Wasser mischbaren und gegenüber Iscyanatgruppen inerten organischen Lösungsmittel verwendbar.

Vorteilhafterweise werden organische Lösungsmittel mit einem Siedepunkt unter 100°C verwendet. Besonders gute Resultate können mit Aceton und Methylethylketon erhalten werden.

Das wäßrige Dispergiermedium, in dem die Mischung aus (A) und (b) dispergiert wird, besteht aus Wasser, das auch noch organische Lösungsmittel enthalten kann. Als Beispiele für Lösungsmittel, die im Wasser vorhanden sein können, seien heterocyklische, aliphatische oder aromatische Kohlenwasserstoffe, ein- oder mehrwertige Alkohole, Ether, Ester und Ketone, wie z.B. N-methylpyrrolidon, Toluol, Xylol, Butanol, Ethyl- und Butylglykol sowie deren Acetate, Butyldiglycol, Ethylenglykoldibutylether, Ethylenglykoldiethylether, Diethylenglykoldimethylether, Cyclohexanon, Methylethylketon, Aceton, Isophoron oder Mischungen davon genannt.

Nach Überführung des aus (A) und (B) bestehenden Gemisches in das wäßrige Dispergeirmedium wird eine stabile wäßrige Dispersion erhalten, die aus Teilchen besteht, deren Größe durch gezielte Variation der oben diskutierten Parameter beeinflußbar ist. Anschließend wird die so erhaltene Dispersion so hoch erhitzt, daß die Komponenten (A) und (B) zu vernetzten Polymermikroteilchen umgesetzt werden.

Das zur Dispergierung bzw. Lösung des aus den Komponenten (A) und (B) bestehenden Gemisches verwendete organische Lösungsmittel kann vor der Umsetzung der Komponenten (A) und (B) bei einer Temperatur, die unter der zur Bildung von vernetzten Polymermikroteilchen notwendigen Reaktionstemperatur liegt, gegebenenfalls im Vakuum abdestilliert werden; es ist aber auch möglich, das organische Lösungsmittel im Laufe der Vernetzungsreaktion abzudestillieren.

Ganz besonders bevorzugte Ausführungsformen der Erfindung bestehen darin, daß die oben näher erläuterten Dispersionen hergestellt worden sind, indem

(1) ein Gemisch aus den Komponenten (A) und (B) in einem wäßrigen Medium dispergiert wird, wobei
- die Komponente (A) aus Polyesterpolyolen, deren Moleküle im Durchscnitt je eine Carboxylatgruppe und mindestens zwei, bevorzugt mehr als zwei Hydroxylgruppen tragen und
- die Komponente (B) aus Polyisocyanatverbindungen, die bevorzugt mehr als zwei an (cyclo)aliphatische Reste gebundene Isocyanatgruppen enthalten,

besteht und wobei das Gemisch aus den Komponenten (A) und (B) zuvor in einem mit Wasser mischbaren, unter 100°C siedenden, gegenüber Isocyanatgruppen inerten organischen Lösungsmittel, bevorzugt Aceton und/oder Methylethylketon, gelöst oder dispergiert worden ist, und

(2) die so erhaltene Dispersion anschließend so hoch erhitzt wird, daß die Komponenten (A) und (B) zu vernetzten Polymermikroteilchen umgesetzt werden,

wobei das zur Lösung bzw. Dispergierung des aus den Komponenten (A) und (B) bestehenden Gemisches benutzte Lösungsmittel entweder vor der Umsetzung der Komponenten (A) und (B) bei einer Temperatur, die unter der zur Bildung der vernetzten Miktroteilchen notwendigen Reaktionstemperatur oder bei einer Temperatur, die mindestens so hoch wie die zur Bildung der vernetzten Teilchen notwendigen Reaktionstemperatur ist, abdestilliert wird.

Gegenstand der vorliegenden Erfinudung sind auch Beschichtungszusammensetzungen, die neben den erfindungsmäßen Dispersionen noch weiteres filmbildendes Material, gegebenenfalls Pigmente und weitere übliche Additive enthalten können und die sich vorzugsweise zur Herstellung von Basisschichten mehrschichtiger, schützender und/oder dekorativer Überzüge eignen.

Ganz besonders bevorzugte Beschichtungszusammensetzungen werden erhalten, wenn die erfindungsgemäßen Dispersionen in die in DE-A-3545618 offenbarten Beschichtungszusammensetzungen inkorporiert werden.

Die oben beschriebenen Beschichtungszusammensetzungen werden bevorzugt in Verfahren zur Herstellung von mehrschichtigen Überzügen auf Substratoberflächen verwendet, bei welchen

(1) als Basisbeschichtungszusammensetzung eine wäßrige Dispersion aufgebracht wird,

(2) aus der in Stufe (1) aufgebrachten Zusammensetzung ein Polymerfilm auf der Substratoberfläche gebildet wird,

(3) auf der so erhaltenen Basisschicht eine geeignete transparente Deckschichtzusammensetzung aufgebracht und anschließend.

(4) die Basisschicht zusammen mit der Deckschicht eingebrannt wird.

Als Deckschichtzusammensetzungen sind grundsätzlich alle bekannten nicht oder nur transparent pigmentierten Überzugsmittel geeignet. Hierbei kann es sich um konventionelle lösungsmittelhaltige Klarlacke, wasserverdünnbare Klarlacke oder Pulverklarlacke handeln.

Als zu beschichtende Substrate kommen vor allem vorbehandelte Metallsubstrate in Frage, es können aber auch nicht vorbehandelte Metalle und beliebige andere Substrate wie z.B. Holz oder Kunstsoffe unter Verwendung der erfindungsgemäßen Basisbeschichtzusammensetzungen mit einer mehrschichtigen schützenden und/oder dekorativen Beschichtung überzogen werden.

Die Erfindung wird in den folgenden Beispielen näher erläutert. Alle Angaben über Teile und Prozentsätze sind Gewichtsangaben, falls nicht ausdrücklich etwas anderes festgestellt wird.

Beispiel 1

1.1 Herstellung des Polyesterpolyols

Aus Hexandiol-1,6, Isophthalsäure und Trimellithsäureanhydrid (3:1:1) wird ein Polyester hergestellt mit einer säurezahl (SZ) von 43 und einem OH-Äquivalentgewicht von 433. Dieser Polyester wird 80%ig in Methylethylketon gelöst.

1.2 Herstellung des Isocyanates

333 g Isophorondiisocyanat werden in 200 g Methylethylketon gelöst und 0,5 g Dibutylzinndilaurat zugegeben. Dann werden portionsweise 67 g Trimethylolpropan so zugegeben, daß die Temperatur nicht über 70°C steigt. Nach 4 h beträgt der NCO-Gehalt 10%.

1.3 Herstellung einer Dispersion von vernetzten Polymermikroteilchen

500 g der Polyesterlösung und 370 g des Isocyanates werden in einem Vierhalskolben unter Rühren und unter Zugabe von zusätzlichen 100 g Methylethylketon gemischt. Zu dieser Mischung wird eine Lösung von 16,7 g Dimethylethanolamin in 710 g Wasser gegeben (Neutralisationsgrad 61%). Es entsteht eine milchig-weiße Dispersion. Jetzt wird die Dispersion unter Rühren auf 90°C erhitzt und ca. 3 h bei 90-95°C gehalten. Dabei destilliert das Methylethylketon ab und man erhält eine wäßrige 45%ige koagulatfreie Dispersion vernetzter Teilchen.

Beweis:

Zu 1 ml dieser Dispersion werden wieder 5 ml THF gegeben. Es entsteht eine weiß-bläuliche schimmernde Dispersion, die auch durch Zugabe von Dimethylformamid nicht in Lösung geht.

Beispiel 2

2.1 Herstellung des Polyesterpolyols

381 Teile Hexandiol-1,6 und 179 Teile Isophthalsäure werden in einen 4-Hals-Kolben, der mit Rührer, Thermometer, Gaseinleitungsrohr und einer Füllkörperkolonne ausgerüstet ist, eingewogen und unter Rühren und Einleiten eines schwachen Stickstoffstroms so aufgeheizt, daß die Kolonnenkopftemperatur 100°C und die Reaktionstemperatur 220°C nicht überschreitet. Wenn die Säurezahl unter 10 gefallen ist, wird auf 150°C abgekühlt, und es werden 206 Teile Trimellithsäureanhydrid zugegeben. Danach wird wei-

der so aufgeheizt, daß die Kolonnenkopftemperatur 100°C und die Reaktionstemperatur 170°C nicht überschreitet. Sobald eine Säurezahl von 45 erreicht worden ist, wird abgekühlt und mit 233 Teilen Methylethylketon verdünnt. Die erhaltene Lösung hat einen Festkörpergehalt von 75 Gew.-%.

2.2 Herstellung einer Dispersion vernetzter Polymermikroteilchen (Dispersion I)

In einem zylindrischen Doppelmantel-Glasreaktor, ausgerüstet mit Rührer, Thermometer, Rückflußkühler und Zulaufgefäß, werden 866 Teile der in Beispiel 2.1 hergestellten Polyesterpolyollösung eingewogen und mit 100 Teilen Methylethylketon verdünnt. Dann werden 480 Teile in Beispiel 1 hergestellten Isocyanats zugegeben. Die Mischung wird gerührt, und nach 20 Minuten wird bei Raumtemperatur innerhalb von 30 Minuten eine Mischung aus 32 Teilen Dimethylethanolamin und 1162 Teilen deionisiertem Wasser zugegeben. Es entsteht eine feinteilige Dispersion. Anschließend wird die Temperatur langsam auf 90°C erhöht und der Rückflußkühler durch eine Destillationsbrücke ersetzt, damit des Methylethylketon abdestillieren kann. Das Reaktionsgemisch wird 2 Stunden bei 90°C gehalten und anschließend auf Raumtemperatur abgekühlt. Die erhaltene Dispersion weist eine mittlere Teilchengröße von 113 nm, einen Festkörpergehalt von 46% und einen pH-Wert von 6,75 auf.

Zur Bestimmung des Anteils an unlöslichen, d.h. vernetzten Teilchen werden etwa 1 g der Dispersion mit 40 ml Tetrahydrofuran vermischt und 24 Stunden lang stehengelassen. Anschließend wird die Probe 30 min lang bei 21.000 U/min zentrifugiert. Zur Bestimmung der löslichen Anteile wird das Serum 2 h bei 130°C getrocknet und der zurückbleibende Rückstand ausgewogen. Zur Bestimmung des unlöslichen, d.h. vernetzten Anteils, wird das Zentrifugat 2 h bei 130°C getrocknet und ausgewogen.

Für die Dispersion I werden 59,3 Gew.-% unlösliche Anteile bestimmt.

2.3 Herstellung einer Dispersion vernetzter Polymermikroteilchen (Dispersion II)

In einem zylindrischen Doppelmantel-Glasreaktor, ausgerüstet mit Rührer, Thermometer, Rückflußkühler und Zulaufgefäß, werden 866 Teile der in Beispiel 2.1 hergestellten Polyesterpolyollösung eingewogen und mit 600 Teilen des in Beispiel 1.2 hergestellten Polyisocyanats versetzt. Das Gemisch wird 20 min bei Raumtemperatur gerührt, und anschließend wird in einem Zeitraum von 30 min eine Mischung aus 32 Teilen Dimethylethanolamin und 1260 Teilen Wasser zugefügt. Es entsteht eine feinteilige Dispersion. Nun wird der Rückflußkühler durch eine Destillationsbrücke ersetz und die Temperatur langsam auf 90°C erhöht. Nach etwa 1 h ist das Methylethylketon abdestilliert, und das Reaktionsgemisch hat einer Temperatur von 90°C. Die Reaktionstemperatur von 90°C wird noch weitere 3 h aufrecht erhalten, und schließlich wird auf Raumtemperatur abgekühlt.

Die erhaltene Dispersion weist einen Festkörpergehalt von 47%, einen pH-Wert von 6,75, einen Anteil an unlöslichen Teilchen von 59,6% und eine mittlere Teilchengröße von 91 nm auf.

2.4 Herstellung einer Dispersion vernetzter Polymermikroteilchen (Dispersion III)

In einem zylindrischen Doppelmantel-Glasreaktor, ausgerüstet mit Rührer, Thermometer, Rückflußkühler und Zulaufgefäß, werden 1154 Teile der in Beispiel 2 hergestellten Polyesterpolyollösung eingewogen und mit 222 Teilen Isophorondiisocyanat versetzt. Dann wird 20 min bei Raumtemperatur gerührt, und anschließend wird innerhalb von 30 min eine Mischung aus 41,5 Teilen Dimethylethanolamin und 1657 Teilen Wasser zugesetzt. Es entsteht eine feinteilige Dispersion. Dann wird der Rückflußkühler durch eine Destillationsbrücke ersetzt und die Temperatur der Dispersion auf 90°C erhöht. Dabei destilliert das Methylethylketon ab. Sobald die Dispersion eine Temperatur von 90°C erreicht hat, wird sie noch 3 h bei dieser Temperatur gehalten und schließlich auf Raumtemperatur abgekühlt. Die erhaltene Dispersion weist einen Festkörpergehalt von 40%, einen pH-Wert von 6,85 und eine mittlere Teilchengröße von 83 nm auf. Der Anteil an vernetzten Teilchen beträgt 27,6 Gew.-%.

2.5 Herstellung einer Dispersion vernetzter Polymermikroteilchen (Dispersion IV)

Die Dispersion IV wird in derselben Weise hergestellt wie die Dispersion III, nur werden anstelle von 222 Teilen Isophorondiisocyanat 266 Teile Isophorondiisocyanat eingesetzt. Die so erhaltene Dispersion weist einen Festkörpergehalt von 42 Gew.-%, einen pH-Wert von 6,95 und eine mittlere Teilchengröße von 95 nm auf. Der Anteil an vernetzten Teilchen beträgt 29,7 Gew.-%.

Beispiel 3

Einsatz der erfindungsgemäßen Dispersionen in Basisbeschichtungszusammensetzungen für Zweischicht-Metalleffektlackierungen des Basecoate/Clearcoat-Typs

Herstellung von Basisbeschichtungszusammensetzungen

Unter Verwendung der erfindungsgemäßen Dispersionen werden nach allgemein bekannten Methoden vier unterschiedliche Basisbeschichtungszusammensetzungen hergestellt. Die Zusammensetzungen der Basisbeschichtungszusammensetzungen sind der folgenden Tabelle zu entnehmen:

|  | 1 | 2 | 3 | 4 |
|---|---|---|---|---|
| Dispersion I | 19 | — | — | — |
| Dispersion II | — | 19 | — | — |
| Dispersion III | — | — | 22 | — |
| Dispersion IV | — | — | — | 21 |
| Verdickungsmittel[1] | 25 | 25 | 25 | 25 |
| Melaminharz[2] | 2 | 2 | 2 | 2 |
| Polyesterharz[3] | 5 | 5 | 5 | 5 |
| Dimethylethanolamin (10%ig in Wasser) | 0,7 | 0,7 | 0,7 | 0,7 |
| Aluminiumpigment[4] | 5 | 5 | 5 | 5 |
| Butylglykol | 5 | 5 | 5 | 5 |
| Wasser | 38,3 | 38,3 | 38,3 | 38,3 |

[1]) Als Verdickungsmittel wurde eine handelsübliche Na—Mg—Li-Silikatpaste (3%ig in Wasser) eingesetzt

[2]) Handelsübliches mit Methanol verethertes Melamin-Formaldehydharz (70%ig in Wasser)

[3]) Herstellung des Polyesterharzes: In einem Reaktor, der mit einem Rührer, einem Thermometer und einer Füllkörperkolonne ausgestattet ist, werden 832 Teile Neopentylglykol eingewogen und zum Schmelzen gebracht. Dann werden 664 Teile Isophthalsäure zugegeben, und das Reaktionsgemisch wird unter Rühren so aufgeheizt, daß die Kolonnenkopftemperatur 100°C und die Reaktionstemperatur 20°C nicht übersteigt. Nach Erreichen einer Säurezahl von 8,5 wird auf 180°C abgekühlt, und es werden 384 Teile Trimellithsäureanhydrid zugegeben. Danach wird weiter verestert, bis eine Säurezahl von 39 erreicht wird. Schließlich wird mit 425 Teilen Butylglykol verdünnt.

[4]) Handelsübliche Al-Pigmentpaste (65%ig in Wasser, durchschnittlicher Teilchendurchmesser: 10 μm).

Mit den oben beschriebenen Basislacken wurden Zweischicht-Metalleffektlackierungen nach dem üblichen Naß-in-naß-Verfahren hergestellt. Die Lackierungen zeigten einen ausgezeichneten Metalleffekt und einen sehr guten Klarlackstand.

## Patentansprüche

1. Dispersionen von vernetzten Polymermikroteilchen in wäßrigen Medien, dadurch gekennzeichnet, daß die Dispersionen hergestellt worden sind, indem

(1) ein Gemisch aus den Komponenten (A) und (B) in einem wäßrigen Medium stabil dispergiert worden ist, wobei

- die Komponente (A) aus einem oder mehreren mindestens 2 Hydroxylgruppen enthaltenden Polyesterpolyol(en) und
- die Komponente (B) aus einer oder mehreren Polyisocyanatverbindung(en)

besteht und wobei die als Komponente (A) eingesetzten Polyesterpolyole eine zur Bildung einer stabilen Dispersion ausreichende Anzahl ionischer Gruppen, bevorzugt Carboxylatgruppen, enthalten und wenigstens ein Teil der Komponenten (A) und/oder (B) mehr als 2 Hydroxylgruppen bzw. Isocyanatgruppen pro Molekül enthält und

(2) die so erhaltene Dispersion anschließend so hoch erhitzt worden ist, daß die Komponenten (A) und (B) zu vernetzten Polymermikroteilchen umgesetzt worden sind.

**2.** Verfahren zur Herstellung von Dispersionen vernetzter Polymermikroteilchen in wäßrigen Medien, dadurch gekennzeichnet, daß die Dispersionen hergestellt werden, indem

(1) ein Gemisch aus den Komponenten (A) und (B) in einem wäßrigen Medium stabil dispergiert wird, wobei

- die Komponente (A) aus einem oder mehreren mindestens 2 Hydroxylgruppen enthaltenden Polyesterpolyol(en) und
- die Komponente (B) aus einer oder mehreren Polyisocyanatverbindung(en)

besteht und wobei die Komponente (A) über eine zur Bildung einer stabilen Dispersion ausreichende Anzahl ionischer Gruppen, bevorzugt Carboxylatgruppen, verfügt und wenigstens ein Teil der Komponenten (A) und/oder (B) mehr als 2 Hydroxyl- bzw. Isocyanatgruppen pro Molekül enthält, und

(2) die so erhaltene Dispersion anschließend so hoch erhitzt wird, daß die Komponenten (A) und (B) zu vernetzten Polymermikroteilchen umgesetz werden.

**3.** Dispersionen oder Verfahren nach einem der Ansprüche 1 bis 2 dadurch gekennzeichnet, daß als Komponente (A) ein Polyesterpolyol eingesetzt worden ist bzw. wird, dessen Moleküle im Durchschnitt je eine Carboxylatgruppe und mindestens zwei Hydroxylgruppen tragen.

**4.** Dispersionen oder Verfahren nach einem der Ansprüche 1 bis 3 dadurch gekennzeichnet, daß als Komponente (B) Polyisocyanatverbindungen eingesetzt worden sind bzw. werden, deren isocyanatgruppen an (cyclo)aliphatische Reste gebunden sind.

**5.** Dispersionen oder Verfahren nach einem der Ansprüche 1 bis 4 dadurch gekennzeichnet, daß das Gemisch aus den Komponenten (A) und (B) in Form einer Lösung bzw. Dispersion in einem mit Wasser mischbaren, unter 100°C siedenden, gegenüber Isocyanatgruppen inerten organischen Lösungsmittel bzw. Lösungsmittelgemisch, bevorzugt Methylethylketon, in dem wäßrigen Medium dispergiert worden ist bzw. wird.

**6.** Dispersionen oder Verfahren nach Anspruch 5 dadurch gekennzeichnet, daß das organische Lösungsmittel bzw. Lösungsmittelgemisch vor der Umsetzung der Komponenten (A) und (B) bei einer Temperatur, die unter der zur Bildung von vernetzten Polymermikroteilchen notwendigen Reaktionstemperatur liegt, abdestilliert worden ist bzw. wird.

**7.** Dispersionen oder Verfahren nach Anspruch 5 dadurch gekennzeichnet, daß das organische Lösungsmittel bzw. Lösungsmittelgemisch bei einer Temperatur abdestilliert worden ist bzw. wird, die mindestens so hoch wie die zur Bildung von vernetzten Polymermikroteilchen notwendige Reaktionstemperatur ist.

**8.** Beschichtungszusammensetzung bestehend aus einer Dispersion von vernetzten Polymermikroteilchen gemäß Anspruch 1 mit einem Durchmesser von < 1 μm in einem wäßrigen Medium, die neben den Polymermikroteilchen auch noch weiteres filmbildendes Material, Pigmente und weitere übliche Additive enthalten kann und sich vorzugsweise zur Herstellung von Basisschichten mehrschichtiger, schützender und/oder dekorativer Überzüge eignet.

**9.** Verwendung der Dispersionen nach einem der Ansprüche 1 bis 7 in Beschichtungszusammensetzungen.

## Claims

**1.** Dispersions of crosslinked polymer micro-particles in an aqueous medium, characterized in that the dispersion has been prepared:

(1) by preparing a stable dispersion of a mixture of the components (A) and (B) in an aqueous medium, the component (A) being composed of one or more polyester-polyols containing at least 2 hydroxyl groups, and the component (B) being composed of one or more polyisocyanate compounds, and the polyesterpolyols employed as component (A) containing a number of ionic groups, preferably carboxylate groups, sufficient to form a stable dispersion, and at least one part of the components (A) and/or (B) containing more than 2 hydroxyl or isocyanate, respectively, groups per molecule and

(2) by subsequently heating the dispersion thus obtained to a temperature sufficiently high for the components (A) and (B) to react to form crosslinked polymer micro-particles.

**2.** Process for the preparation of dispersions of crosslinked polymer micro-particles in aqueous media, characterized in that the dispersions are prepared:

(1) by preparing a stable dispersion of a mixture of the components (A) and (B) in an aqueous medium, the component (A) being composed of one or more polyester-polyols containing at least 2 hydroxyl groups, and the component (B) being composed of one or more polyisocyanate compounds, and the component (A) having available a number of ionic groups, preferably carboxylate groups, sufficient to form a stable dispersion, and at least one part of the components (A) and/or (B) containing more than 2 hydroxyl or isocyanate, respectively, groups per molecule and

(2) by subsequently heating the dispersion thus obtained to a temperature sufficiently high for the components (A) and (B) to react to form crosslinked polymer micro-particles.

3. Dispersions or processes according to one of Claims 1 to 2, characterized in that a polyester-polyol in which the molecules each carry, on average, one carboxylate group and at least two hydroxyl groups has been, or is, employed as the component (A).

4. Dispersions or processes according to one of Claims 1 to 3, characterized in that polyisocyanate compounds in which the isocyanate groups are attached to (cyclo)aliphatic radicals have been, or are, employed as the component (B).

5. Dispersions or processes according to one of Claims 1 to 4, characterized in that the mixture of the components (A) and (B) has been, or is, dispersed in the aqueous medium in the form of a solution or dispersion in a water-miscible, organic solvent or solvent mixture which boils below 100°C and is inert towards isocyanate groups, preferably methyl ethyl ketone.

6. Dispersions or processes according to Claim 5, characterized in that the organic solvent or solvent mixture has been, or is, removed by distillation before the reaction of the components (A) and (B), at a temperature below the reaction temperature required for the formation of crosslinked polymer micro-particles.

7. Dispersions or processes according to Claim 5, characterized in that the organic solvent or solvent mixture has been, or is, removed by distillation at a temperature which is at least as high as the reaction temperature required for the formation of crosslinked polymer micro-particles.

8. Coating composition which is composed of a dispersion of crosslinked polymer micro-particles according to Claim 1, having a diameter of <1 μm in an aqueous medium and which, in addition to the polymer micro-particles, can also additionally contain further film-forming material, pigments and further customary additives, and which is preferentially suitable for the production of base coats of multi-coat, protective and/or decorative coatings.

9. Use of the dispersions according to one of Claims 1 to 7 in coating compositions.

**Revendications**

1. Dispersion de microparticules de polymère réticulé en milieu aqueux, caractérisée en ce que la dispersion est préparée de la manière suivante:

(1) un mélange des composants (A) et (B) est dispersé de manière stable dans un milieu aqueux,
- le composant (A) consiste en un ou plusieurs polyols de polyester contenant au moins deux radicaux hydroxyle et
- le composant (B) consiste en un ou plusieurs composés polyisocyanate et
le polyol de polyester utilisé comme composant (A) contient un nombre suffisant de radicaux ioniques, de préférence des radicaux carboxylate, pour la formation d'une dispersion stable, et au moins une partie du composant (A) et/ou (B) contient plus de deux radicaux hydroxyle ou radicaux isocyanate par molécule, et

(2) la dispersion ainsi obtenue est ensuite chauffée à une température suffisante pour que les composants (A) et (B) réagissent pour former des micro-particules de polymère réticulé.

2. Procédé de préparation d'une dispersion de microparticules de polymère réticulé en milieu aqueux, caractérisé en ce que la dispersion est préparée de la manière suivante:

(1) un mélange des composants (A) et (B) est dispersé de manière stable dans un milieu aqueux,
- le composant (A) consiste en un ou plusieurs polyols de polyester contenant au moins deux ra-

**12**

dicaux hydroxyle, et
- le composant (B) consiste en un ou plusieurs composés de polyisocyanate et
le composant (A) dispose d'un nombre suffisant de radicaux ioniques, de préférence des radicaux carboxylate, pour former une dispersion stable et au moins une partie du composant (A) et/ou (B) contenant plus de deux radicaux hydroxyle ou isocyanate par molécule, et
(2) la dispersion ainsi obtenue est ensuite chauffée à une température suffisante pour que les composants (A) et (B) réagissent pour former des microparticules de polymère réticulé.

3. Dispersion ou procédé suivant l'une quelconque des revendications 1 à 2, caractérisé en ce qu'un polyol de polyester est utilisé comme composant (A), ses molécules comporte en moyenne un radical carboxylate et au moins deux radicaux hydroxyle.

4. Dispersion ou procédé suivant l'une quelconque des revendications 1 à 3, caractérisé en ce que le composé polyisocyanate utilisé comme composant (B), ses radicaux isocyanate sont fixés sur un reste (cyclo)aliphatique.

5. Dispersion ou procédé suivant l'une quelconque des revendications 1 à 4, caractérisé en ce que le mélange des composants (A) et (B) est ou a été dispersé sous la forme d'une solution ou d'une dispersion dans un solvant ou un mélange de solvants organiques miscible à l'eau, de point d'ébullition inférieur à 100°C et inerte vis-à-vis des radicaux isocyanate, de préférence la méthyléthylcétone, dans un milieu aqueux.

6. Dispersion ou procédé suivant la revendication 5, caractérisé en ce que le solvant ou le mélange de solvants organiques avant la transformation des composants (A) et (B) peut être distillé à une température qui est inférieure à la température de réaction nécessaire pour la formation de microparticules de polymère réticulé.

7. Dispersion ou procédé suivant la revendication 5, caractérisé en ce que le solvant ou le mélange de solvants organiques est distillé à une température qui est au moins celle de la température de réaction nécessaire pour la formation de microparticules de polymère réticulé.

8. Composition d'enduction consistant en une dispersion de microparticules de polymère réticulé suivant la revendication 1, d'un diamètre inférieur à 1 μm dans un milieu aqueux, qui en plus des microparticules de polymère peut aussi contenir d'autres matières filmogènes, des pigments et d'autres additifs classiques et qui convient de préférence pour la préparation de couches de base de revêtements multicouches protecteurs et/ou décoratifs.

9. Utilisation de la dispersion suivant l'une quelconque des revendications 1 à 7 dans une composition d'enduction.